# EUROPEAN PATENT APPLICATION

(11) **EP 1 345 433 A2**
(43) Date of publication of application: **17.09.2003**
(21) Application number: 03251486.1
(22) Date of filing: 12.03.2003
(51) Int. Cl.: H04N 7/01

(54) **Image format conversion**

(30) Priority: 14.03.2002 JP 2002070122
(71) Applicant: FUJITSU LIMITED, Kawasaki-shi, Kanagawa 211-8588 (JP)
(72) Inventor: Nakata, Shinichiro, Fujitsu Limited, Kawasaki-shi, Kanagawa, 211-8588 (JP)
(74) Representative: Stebbing, Timothy Charles

(57) **Abstract**

An image format conversion device is provided that performs format conversion between a first image format having a first horizontal dot number and a second image format having a smaller, second horizontal dot number, which has a changeover circuit that changes over the order of a horizontal filter (12) and a vertical filter (18) in accordance with the type of input or output image format. If the input image data is of the first image format, the horizontal filter (12) is provided on the upstream side and a line memory (16) and the vertical filter (18) are provided on the downstream side. If the output image data is of the first image format, the line memory (16) and the vertical filter (18) are provided on the upstream side and the horizontal filter (12) is provided on the downstream side.

## Description

The present invention relates to an image format conversion device whereby an image can be expanded or compressed, in order to convert between different formats of image data, for example different television signal formats. The present invention also relates to a program and method for performing image format conversion.

With the spread of digital television broadcasting in recent years, there has been considerable development of digital television broadcast receivers. In digital television broadcasting, digital data encoded with a prescribed compression format such as MPEG is transmitted from satellites or broadcast stations and is received by receivers provided in each home. Such receivers decode the encoded digital data using an MPEG decoder etc and output a signal containing video, audio and text to a display device (TV or monitor) or video recorder (VCR, optical disc drive, magnetic disc drive) etc.

A plurality of image formats are laid down for the television display device or video recorder. For example, with the conventional NTSC system, the image format is 480i; apart from this, the high-resolution image formats 480p, 720p and 1080i etc are employed. The symbol "i" means "interlaced" and "p" means "progressive".

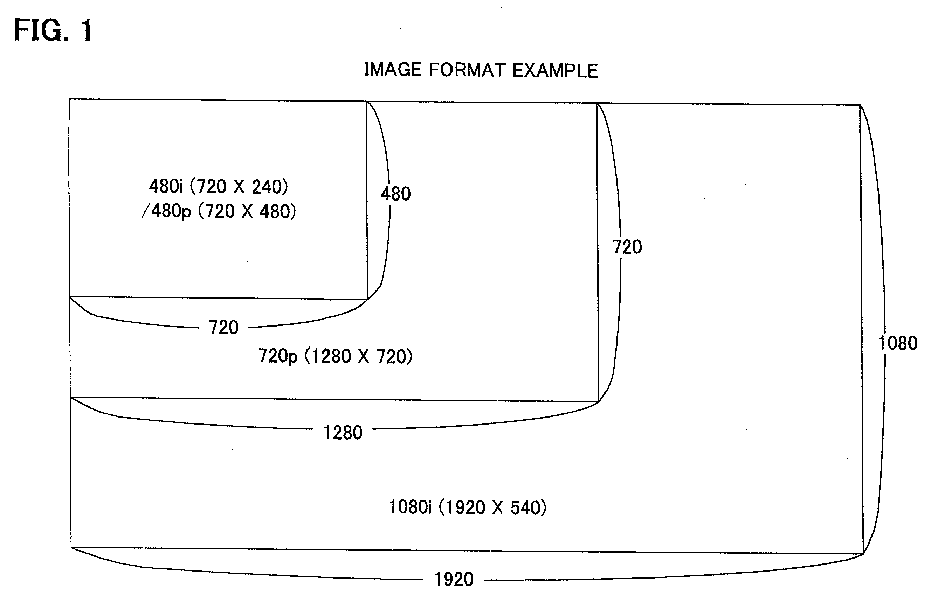

Figure 1 is a view showing an example of a television image format. As described above, in common use there are four types of image format: 480i (horizontal 720 dots X vertical 240 lines), 480p (horizontal 720 dots X vertical 480 lines), 720p (horizontal 1280 dots X vertical 720 lines) and 1080i (horizontal 1920 dots X vertical 540 lines). As shown in Figure 1, these formats are of progressively higher resolution in the order: 480i/p, 720p, 1080i, with the number of pixels in both the horizontal and vertical direction progressively increasing. However, in the case of an interlaced system, the number of pixels in the vertical direction is half the format number, but in the progressive system is the same number of pixels as the format.

Due to the common use of such a plurality of image formats, if the transmitted image format and the image format of display or recording are different, image format conversion must be performed. For example, when the transmitted data is of image format 480i or 480p, i.e. of low resolution, and the display device has a high-resolution image format of 720p or 1080i, format conversion to expand the image must be performed; in the contrary case, format conversion to compress the image must be performed. Also, when 720p image format is converted to 1080i image format, it is necessary to expand the horizontal direction and to compress the vertical direction by thinning out. Respectively different conversion processes are therefore required depending on the combination of image formats.

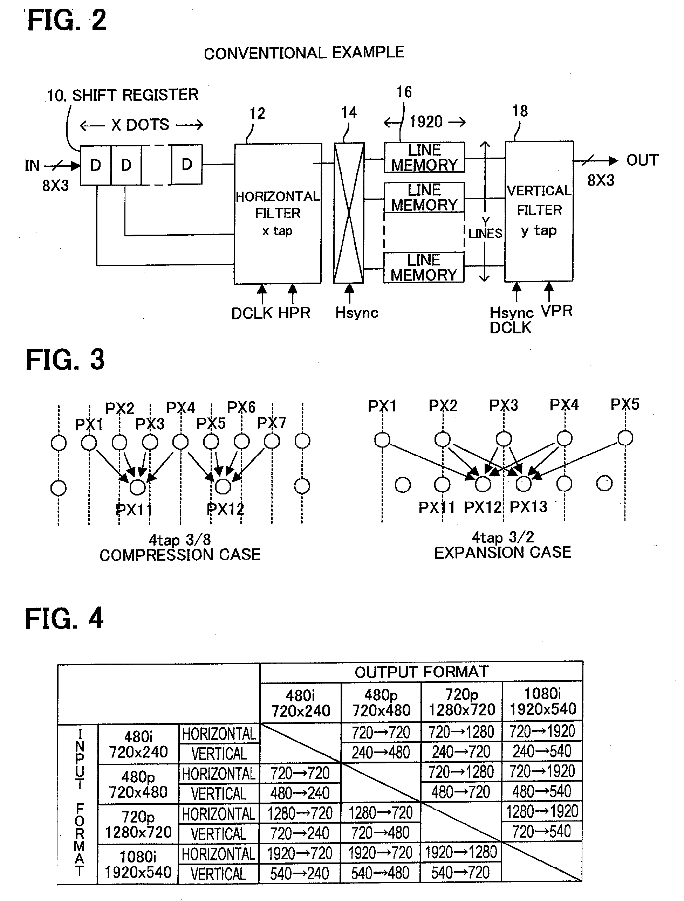

Figure 2 is a layout diagram of a known image format conversion circuit. Figure 3 is a view given in explanation of compression and expansion in format conversion. In the image format conversion circuit shown in Figure 2, an input pixel data sequence IN constituting one line is successively supplied and input to horizontal filter 12 through shift register 10. Horizontal filter 12 performs expansion or compression in the horizontal direction by generating single pixel data from x adjacent pixel data. The left-hand side in Figure 3 shows 3/8 compression and the right-hand side shows 3/2 expansion, respectively. The respective compression and expansion are examples in which a single pixel data item is generated from four-tap pixel data. The upper part of Figure 3 shows the input pixel data PX1 to PX7 and the lower part shows output pixel data PX11 to PX13, respectively.

The shift register of Figure 2 is an example of tap number x; in order to perform the compression or expansion of Figure 3, a 4-tap i.e. a 4-bit shift register is required. When four input pixel data items IN are input to shift register 10, horizontal filter 12 generates a single pixel data item from the four input pixel data items, in synchronization with dot clock DCLK. Describing this in terms of the compression of Figure 3, output pixel data PX11 is generated from input pixel data PX1 to PX4 and output pixel data PX12 is generated from input pixel data PX4 to PX7. How the four input pixel data are distributed depends on the construction of horizontal filter 12 and the combination of formats converted. For this purpose, a parameter HPR is supplied. Also, describing this in terms of the expansion of Figure 3, output pixel data PX11 and PX12 are generated from input pixel data PX1 to PX4 and output pixel data PX13 is generated from input pixel data PX2 to PX5.

The output of horizontal filter 12 is stored in line memory 16, one line at a time, through changeover circuit 14 that is operated in response to horizontal synchronization signal Hsync. This line memory 16 is an example in which the tap number of vertical filters is y. Then, when pixel data of line number equal to the number of input taps y of vertical filter 18 have been stored in line memory 16, y tap pixel data is sequentially read from line memory 16 and input to vertical filter 18. Vertical filter 18 generates a single item of pixel data from y pixel data in synchronization with dot clock DCLK, thereby performing expansion and compression of the vertical direction. The expansion and compression operations of vertical filter 18 are the same as in the case of horizontal filter 12.

Figure 4 is a table showing a combination of digital television image formats that are currently standardized as described in Figure 1. As is clear from the Table of Figure 4, considering the case where the output image format is 1080i (horizontal 1920 dots X vertical 540 lines) in the image format conversion circuit of Figure 2, the length of line memory 16 must be 1920 dots. If the number of input taps of the vertical filter 18 is taken as y, the capacity of line memory 16 is 1920 dots X y taps. Each pixel data item is for example YCbCr type data with 8 bits in each component, making a total of at least 24 bits so the increase in capacity of the line memory has a considerable effect on the size of the circuitry of the image format conversion circuit. Also, since fast SRAM is typically adopted for the line memory, the increase in capacity of the line memory increases the power consumption of the image format conversion circuit.

On the other hand, let us consider a construction in which the shift register and horizontal filter are provided downstream of the line memory and vertical filter of Figure 2. In this case, considering the case where the input image format is 1080i, likewise, the length of the line memory must be 1920 dots so no improvement in line memory capacity can be achieved.

It is therefore desirable to provide an image format conversion device operable with a line memory having reduced capacity.

According to one aspect of the present invention, there is provided an image format conversion device that converts the image format of image data having pixel data arranged in horizontal and vertical directions, comprising: a horizontal filter that performs a conversion of pixel data in the horizontal direction; a line memory that stores pixel data of a plurality of lines; a vertical filter that performs a conversion of pixel data in the vertical direction stored in said line memory; and a changeover circuit that changes over an order of said horizontal filter and vertical filter in accordance with a type of input or output image format.

Furthermore, the image format conversion device may be operable for performing format conversion between image formats in an image format group comprising at least a first image format having a first horizontal dot number and a second image format having a second horizontal dot number smaller than the first horizontal dot number, the image format conversion device comprising a changeover circuit capable of changing the order of a horizontal filter and a vertical filter in accordance with the type of input or output image format.

In a preferred embodiment of the above aspect of the present invention, if the input image data is of the first image format, the horizontal filter is provided on the upstream side of a line memory and the vertical filter is provided on the downstream side of the line memory. In this way, the number of dots of the line memory provided on the upstream side of the vertical filter can be made to be the second horizontal dot number corresponding to the second image format. On the other hand, if the output image data is of the first image format, the line memory and vertical filter are provided on the upstream side and the horizontal filter is provided on the downstream side. In this way, the number of dots of the line memory provided on the upstream side of the vertical and horizontal filters can be made to be the second horizontal dot number corresponding to the second image format.

Specifically, if the input image data is of the first image format having the maximum horizontal dot number of the group of image formats, the dot number of one line is compressed by the horizontal filter on the upstream side of the line memory, so the dot number of the line memory does not need to be made of the first horizontal dot number, with the vertical filter provided downstream of the line memory. However, if the output image data is of the first image format having the maximum horizontal dot number, with the pixel data of the second image format input, which is of smaller dot number than the output image, then this input pixel data of smaller dot number is stored in line memory, with compression processing in the vertical direction being performed by the vertical filter and compression in the horizontal direction being performed by a horizontal filter having a shift register on the downstream side.

Even if, in addition to the first and second image formats described above, the group of image formats contains third and fourth image formats having even smaller horizontal dot numbers, by altering the positions of the horizontal filter and vertical filter in accordance with whether the image format of larger horizontal dot number is input or output, it is possible to ensure that the dot number of the line memory on the upstream side of the vertical filter is smaller than the larger horizontal dot number.

According to a second aspect of the present invention there is provided an image format conversion device that converts the input image format of image data included in a digital television signal into a prescribed output image format, comprising: an image format conversion circuit including a horizontal filter that performs a conversion of pixel data in a horizontal direction; a line memory that stores pixel data of a plurality of lines; and a vertical filter that performs a conversion of pixel data in a vertical direction stored in said line memory; and a control circuit that performs changeover control of an order of said horizontal filter and vertical filter of said image format conversion circuit in accordance with the input image format contained in said digital television signal or said output image format; wherein format conversion is performed between image formats in an image format group comprising at least a first image format having a first horizontal dot number and a second image format having a second horizontal dot number smaller than the first horizontal dot number; and wherein said control circuit, if said input image format is said first image format, controls the image format conversion circuit to have a first configuration in which said horizontal filter is provided on an upstream side and said line memory and vertical filter are provided on a downstream side thereof, and, if said output image format is said first image format, controls the image format conversion circuit to have a second configuration in which said line memory and vertical filter are provided on the upstream side and said horizontal filter is provided on the downstream side thereof.

The present invention also provides a computer program and a method as defined in the corresponding independent claims.

Reference is now made, by way of example only, to the accompanying drawings in which:
Figure 1 illustrates examples of image format;
Figure 2 is a layout diagram of a prior art image format conversion circuit;
Figure 3 is a diagram given in explanation of compression and expansion in format conversion;
Figure 4 is a table illustrating combinations of image formats;
Figure 5 illustrates the configuration of a receiver having an image format conversion device according to an embodiment of the present invention;
Figure 6 is a layout diagram of an image format conversion circuit according to this embodiment;
Figure 7 illustrates the operations of compression conversion and expansion conversion in a first configuration of the image format conversion circuit;
Figure 8 illustrates the operations of compression conversion and expansion conversion in a second configuration of the image format conversion circuit; and
Figure 9 is a block diagram of an image format conversion device in the receiver of Figure 5.

An embodiment of the present invention is described below with reference to the drawings. However, the scope of protection of the present invention is not restricted to the embodiment below but extends to all proper variations within the scope of the appended claims.

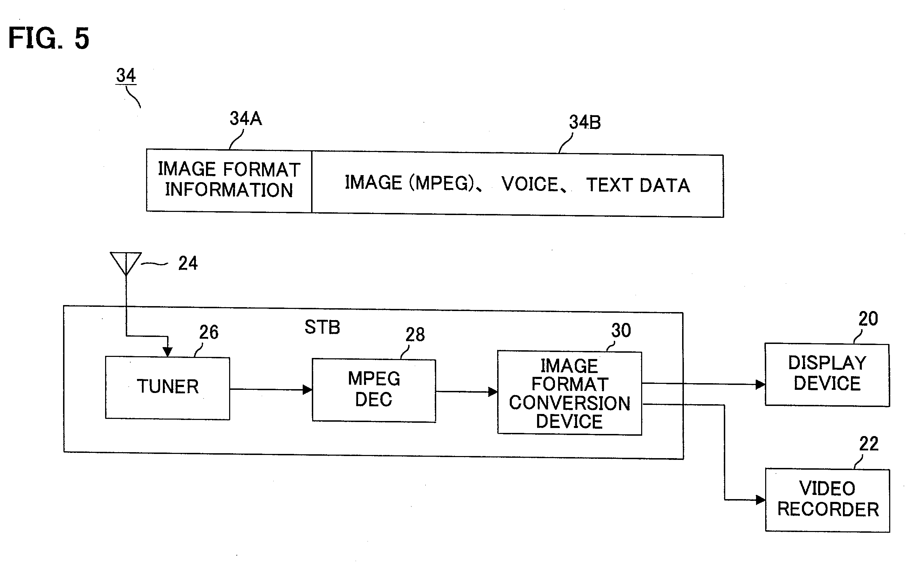

Figure 5 illustrates the configuration of a receiver having an image format conversion device according to an embodiment. A receiver for digital television broadcasts is called a set-top box STB and comprises an antenna 24 that receives digital television signals, a tuner 26 that detects the received signal, a decoder 28 that decodes the encoded digital data and an image format conversion device 30 that converts the image format of the image signal that is decoded. If the digital television signal is encoded in MPEG form, decoder 28 is an MPEG decoder. The set-top box STB constituting the receiver is connected with a high-resolution display device 20 or video recorder 22 of prescribed resolution; the image signal that has been converted to a corresponding image format by image format conversion device 30 is output to the respective display device 20 and video recorder 22.

Figure 5 illustrates the structure of digital television data 34. In digital television data 34, image format information 34A is appended to image, voice and text data 34B. MPEG decoder 28 can therefore detect the image format of the received signal by referring to the received digital television data. In addition, respective output image format information can be set in the set-top box STB in accordance with the image format of the display device 20 and/or video recorder 22. If display device 20 is for example a high-resolution "Hi Vision" device, 1080i or 720p is set as the output image format for the connection terminal to the display device. Also, if video recorder 22 uses the currently popular NTSC system, for example 480i is set as the output image format for the video terminal.

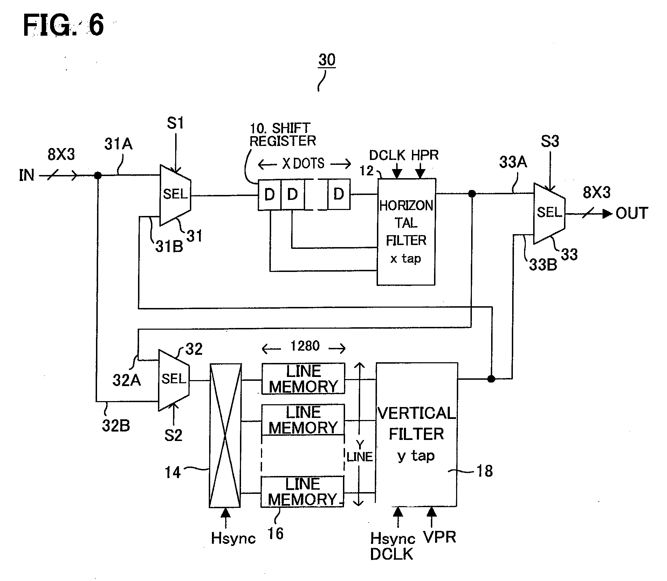

Figure 6 is a layout diagram of the image format conversion circuit according to this embodiment. Structural elements which are the same as in the image format conversion circuit of Figure 1 are given the same reference numerals. In the image format conversion device 30 of this embodiment, a unit comprising shift register 10 and horizontal filter 12 and a unit comprising changeover circuit 14, line memory 16 and vertical filter 18 are arranged so as to be capable of being changed over between upstream and downstream in accordance with the input image format and output image format. For this purpose, there is provided a changeover circuit constituted by three selector circuits 31, 32, 33; these selector circuits select one or other of input terminals A and B in response to respective selector control signals S1, S2 and S3. These selector control signals S1, S2, S3 are supplied from a format conversion control circuit, to be described.

Line memory 16 has 1280 dots of the second largest horizontal dot number in the four types of image format of Figure 1 or Figure 4 and thus is smaller than the 1920 dots of the conventional case. The number of lines of line memory 16 is designed as the maximum input tap number y of vertical filter 18; the number of shift registers 10 is designed as the maximum input tap number x of the horizontal filter 12. The number of input taps of each filter may differ depending on the image format that is to be converted; this can be altered and set by means of parameters HPR and VPR supplied to each filter.

In the case where the output image format is the 1080i format having the maximum number of horizontal dots, input terminals 31B, 32B are respectively selected by the selector circuits 31 and 32 while input terminal 33A is selected by selector circuit 33. As a result, the image format conversion circuit 30 assumes a first processing configuration in which the unit consisting of line memories 16 and vertical filter 18 is provided upstream while the unit consisting of shift registers 10 and horizontal filter 12 is provided downstream. That is, when the output image format is 1080i, the input image format is one or other of 720p, which has the second largest horizontal dot number (1280 dots) or 480p or 480i, which have even smaller horizontal dot numbers (720 dots); thus pixel data corresponding to one line of the input image data can be stored with line memory 16 having a maximum of 1280 dots.

In contrast, in the case where the input image format is 1080i having the maximum number of horizontal dots, respective input terminals 31A, 32A are selected by selector circuits 31, 32 while input terminal 33B is selected by selector circuit 33. As a result, the image format conversion circuit 30 assumes a second processing configuration in which the unit consisting of shift registers 10 and horizontal filter 12 is provided upstream while the unit consisting of line memory 16 and vertical filter 18 is provided downstream. That is, in this case, the output image format can be one or other of 720p, which has the second largest horizontal dot number (1280 dots) or 480p or 480i, which have even smaller horizontal dot numbers (720 dots); so pixel data corresponding to one line of the output image data can be stored with line memory 16 having a maximum of 1280 dots.

When the combinations of input image format and output image format are other than those mentioned above, the image format conversion circuit may be in either the first configuration or the second configuration. In combinations other than those mentioned above, both the input image format and output image format have at most the second highest horizontal dot number so, in both the first and second configurations, the 1280 dot line memory 16 is capable of storing pixel data corresponding to one line of the input image data or output image data.

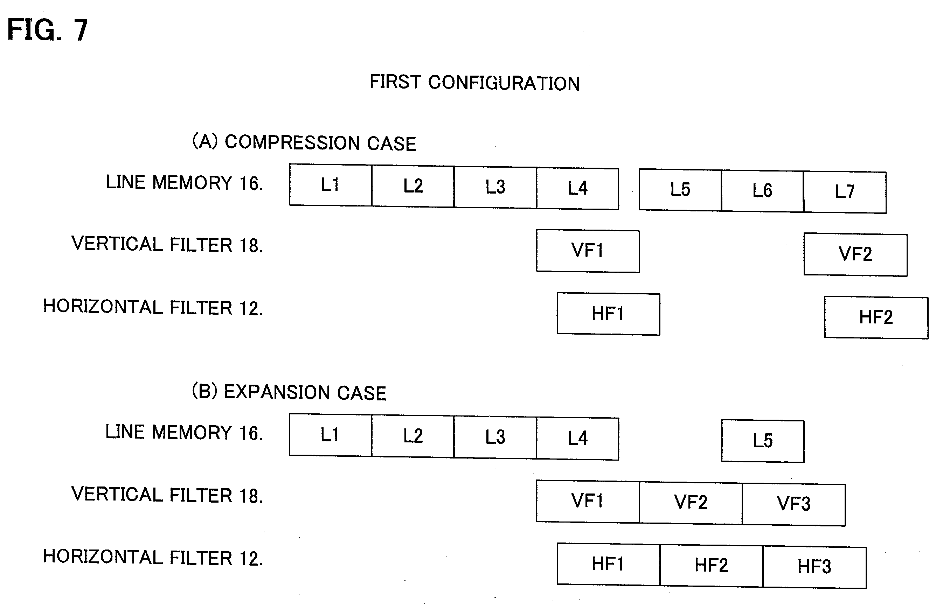

Figure 7 is a view showing the operations of compression conversion and expansion conversion in the case where the image format conversion circuit is in the first configuration. In the compression conversion of Figure 7(A), the input pixel data sequence IN passes through selector circuit 32 and changeover circuit 14 and is stored in each line of line memory 16. In Figure 7, the input tap number is taken as 4 by way of example and the input pixel data sequences L1 to L4 of four lines are stored in line memory 16. Vertical filter 18 successively inputs pixel data in the vertical direction from four line memories 16 and performs compression conversion in accordance with the parameter VPR with the timing with which the input pixel data sequence L4 of the fourth line starts to be input to line memories 16. This parameter VPR is a conversion parameter that is set beforehand in accordance with the combination of input image format and output image format.

The pixel data that has been compression-converted by vertical filter 18 is successively stored in shift register 10 by means of selector circuit 31. When four items of pixel data i.e. data to the number of the input taps on shift register 10 have been stored, horizontal filter 12 inputs these four items of pixel data and performs set compression conversion with a parameter HPR. Its output is output as output pixel data to an output terminal OUT through selector circuit 3.

In addition, the input pixel data sequences L5, L6 and L7 of the next fifth to seventh lines are input to line memories 16. Vertical filter 18 then inputs the pixel data of lines L4 to L7 from line memories 16 with the timing of the commencement of input to line memories 16 of the input pixel data sequence L7 of the seventh line and performs compression conversion thereon. This converted pixel data is sequentially stored in shift register 10 by means of selector 31. The subsequent compression conversion operation of horizontal filter 12 is as described above.

In the case of compression conversion, the number of output pixel data items is smaller than the number of input pixel data items. Consequently, although pixel data are input practically continuously to line memories 16, the processing of the vertical data and/or horizontal data is intermittent.

In contrast, in the case of the expansion conversion of Figure 7(B), from the pixel data L1 to L4 of the first to the fourth lines stored in line memories 16, expansion conversion processing using vertical filter 18 and expansion conversion processing using horizontal filter 12 are performed twice. The pixel data L2 to L5 are therefore input and expansion conversion processing by vertical filter 18 is commenced with the timing with which the pixel data L5 of the fifth line are input to line memories 16.

As shown in the conversion table of Figure 4, the processing of expansion/compression by the horizontal filter and the processing of expansion/compression by the vertical filter are different depending on the combination of input form and output form (format). For example, in the image format conversion circuit of the first configuration, when the output image format is set to 1080i, if the input image format is 720p, the vertical filter performs compression processing from 720 dots to 540 dots, while the horizontal filter performs expansion processing from 1280 dots to 1920 dots. Also, for the same output form, if the input image format is 480i or 480p, both filters perform expansion processing. Also, in the case of conversion between the 4801 and 480p formats, conversion of pixel data in the horizontal direction is unnecessary.

Furthermore, in the case of the first configuration, conversion can be performed for any of 720p, 480p and 480i apart from the 1080i input form and for any of the output forms 720p, 480p or 480i. Thus the parameters VPR and HPR of the respective filters are set to expansion or compression in accordance with the respective combinations.

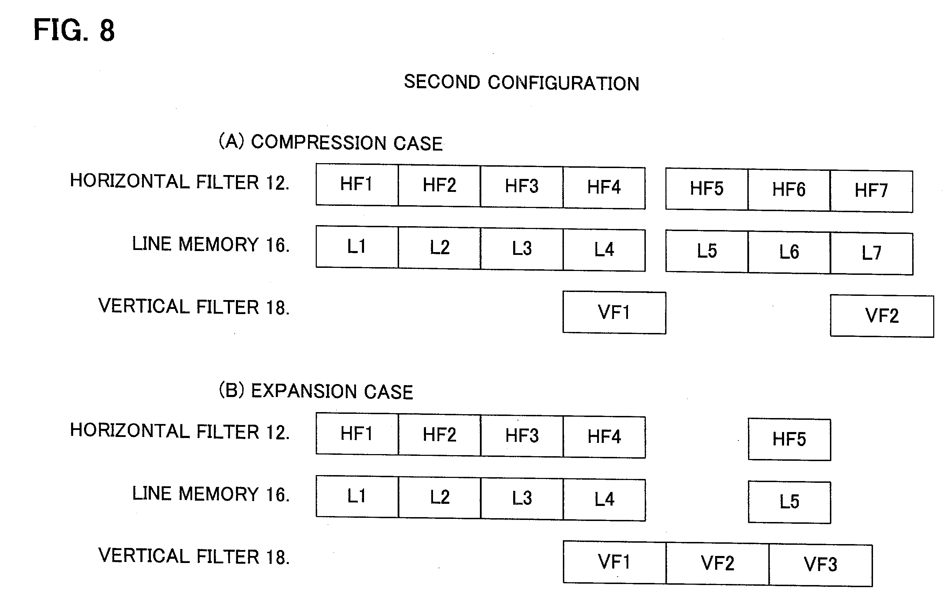

Figure 8 is a view showing the operations of compression conversion and expansion conversion when the image format conversion circuit is in the second configuration. In the second configuration, input pixel data sequence IN is successively stored in shift register 10 through selector 31. When the four pixel data items i.e. data items to the number of the input taps are stored in shift register 10, horizontal filter 12 performs compression or expansion processing. The output of horizontal filter 12 is sequentially stored in line memories 16 through selector circuit 32. Vertical filter 18 starts to perform compression or expansion processing with the timing of commencement of input to the line memory of the pixel data L4 of the fourth line. The output of vertical filter 18 is output to output terminal OUT through selector 33.

As shown by the conversion table of Figure 4, in the case where the input form is 1080i, if the output form is 720p, compression processing is performed by the horizontal filter from 1920 dots to 1280 dots and expansion processing from 540 dots to 720 dots is performed by the vertical filter. Also, conversion processing can be performed with the second configuration for any of the input forms 720p, 480p and 480i and any of the output forms 720p, 480p, or 480i. As shown in the conversion table, the horizontal filter and vertical filter perform expansion or compression processing in accordance with the respective combinations.

As described above, the conversion processing of the horizontal filter and vertical filter varies in accordance with the combination of the input form and output form. In these filters, even for expansion processing in the same configuration, different sorts of expansion processing are necessary depending on the combination of input and output forms and even for compression processing in the same configuration, different sorts of compression processing are necessary depending on the combination of input and output forms; in addition, depending on the combination of input and output forms, in some cases conversion may not be necessary.

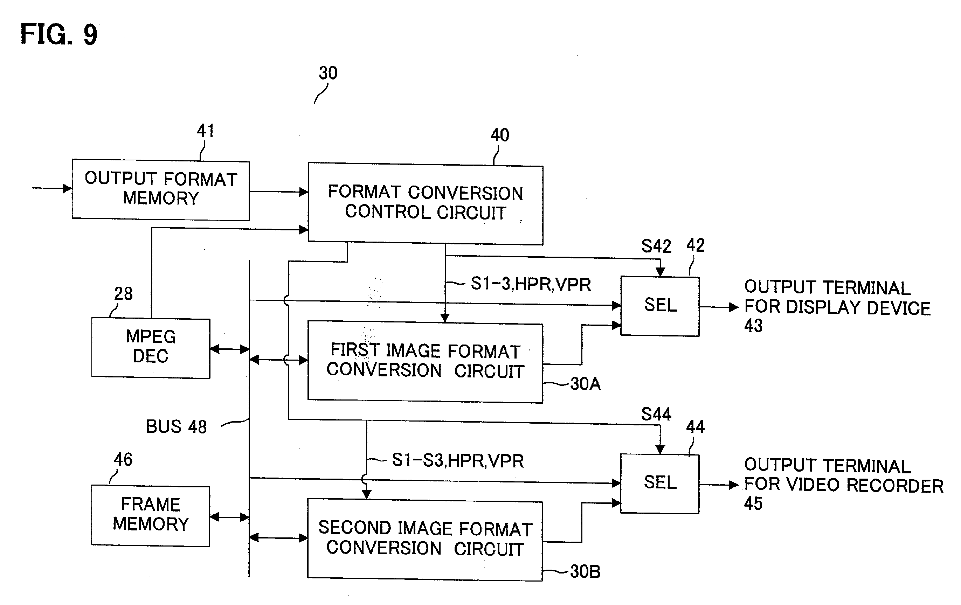

Figure 9 is a block diagram of an image format conversion device in the receiver of Figure 5. As shown in Figure 9, the receiver STB of a digital television comprises an output terminal 43 for the display device and an output terminal 45 for the video recorder. Concomitantly with this, a first image format conversion circuit 30A and a second image format conversion circuit 30B are provided. The first and second image format conversion circuits are circuits as shown in Figure 6. Also, selector control signals S1 to S3, S42 and S44 and filter parameters HPR and VPR are supplied from the format conversion control circuit 40. Signals S1 to S3, HPR and VPR are supplied to the first and second image format conversion circuits 30A and 30B.

Output format memory 41 is a non-volatile memory that stores the image format form of the display device and video recorder connected with output terminals 43 and 45 and is capable of being set externally. The set output format data is applied to format conversion control circuit 40. Also, MPEG decoder 28 detects the image format information from the received digital television data and supplies this data to format conversion control circuit 40. In addition, MPEG decoder 28 stores the pixel data sequence of frames of decoded image data in frame memory 46 through bus 48.

The image format data of the received digital television signal and the output format data that has been set beforehand are supplied to format conversion control circuit 40. In addition, format conversion control circuit 40 supplies the filter parameters HPR and VPR in accordance with the conversion table of Figure 4 to the first and second image format conversion circuits 30A and 30B. Furthermore, when the output image format is 1080i and the input image format is any of 720p, 480p, or 4801, format conversion control circuit 40 supplies selector control signals S1 to S3 to first and second conversion circuits 30A, 30B such that the first configuration of conversion circuits 30A, 30B is produced and selector control signals S42, S44 that select the outputs of the conversion circuits are supplied to selector circuits 42 and 44.

In contrast, when the input image format is 1080i and the output image format is any of 720p, 480p, or 480i, format conversion control circuit 40 supplies selector control signals S1 to S3 to first and second conversion circuits 30A, 30B such that the second configuration of conversion circuits 30A, 30B is produced and selector control signals S42, S44 that select the outputs of the conversion circuits are supplied to selector circuits 42 and 44.

Also, if the output image format and input image format are other than 1080i, selector control signals S1 to S3, such that conversion circuits 30A and 30B assume the first or second configuration, are supplied from control circuit 40.

As already described, the parameters HPR and VPR of the horizontal and vertical filters in conversion circuits 30A and 30B are suitably set in accordance with the combinations of input and output formats converted as described above.

In addition, if the output and input image formats are both the same, format conversion control circuit 40 supplies to selector circuits 42 and 44 selector control signals S42 and S44 whereby the image data of frame memory 46 is directly output without modification. That is, in this situation, format conversion of the image data is not carried out.

In the embodiment described above, the image format conversion circuit is constructed so as to be capable of interchanging the horizontal filter and vertical filter between upstream and downstream in accordance with whether or not the output image format or input image format is a format having the maximum number of horizontal dots. Concurrently with this, the parameters of the horizontal filter and vertical filter are set in accordance with the combination of input and output image formats. In this way, of the plurality of image formats that are the subject of conversion, the number of dots of the line memory provided upstream of the vertical filter does not need to be made the maximum horizontal dot number but rather it is sufficient if it is made to be the second largest horizontal dot number. Reduction in line memory capacity can thereby be achieved.

The image formats that are the subject of conversion as described above are merely examples and the image format conversion circuit described above could be applied to image formats other than these. Also, the described numbers of input taps of the respective filters are only examples and it would also be possible to make the filters capable of being altered in accordance with the combination of conversion formats, i.e. capable of having different tap numbers.

The first and second configurations of the image format conversion circuit regard the order of processing of the input image data in the horizontal and vertical filters, rather than describing different physical layouts of the circuit.

As described above, since, with the present invention, the order of processing of the horizontal filter and vertical filter in the image format conversion device can be altered in optimal fashion in accordance with the input or output image format, the capacity of the line memory connected with the vertical filter can be reduced. Therefore both the size of circuitry of the image format conversion circuit and the power consumption of the circuit can be reduced.

## Claims

1. An image format conversion device that converets the image format of image data having pixel data arranged in horizontal and vertical directions, comprising:
a horizontal filter that performs a conversion of pixel data in the horizontal direction;
a line memory that stores pixel data of a plurality of lines;
a vertical filter that performs a conversion of pixel data in the vertical direction stored in said line memory; and
a changeover circuit that changes over an order of said horizontal filter and vertical filter in accordance with a type of input or output image format.

2. The image format conversion device according to claim 1,
wherein format conversion is performed between image formats in an image format group comprising at least a first image format having a first horizontal dot number and a second image format having a second horizontal dot number smaller than the first horizontal dot number; and
wherein said changeover circuit, if said input image format is said first image format, provides said horizontal filter on an upstream side and said line memory and vertical filter on a downstream side thereof, and, if said output image format is said first image format, provides said line memory and vertical filter on the upstream side and said horizontal filter on the downstream side thereof.

3. The image format conversion device according to claim 1 or 2, further comprising a register, provided on an upstream side of said horizontal filter, that stores a plurality of pixel data and inputs the plurality of pixel data to said horizontal filter.

4. The image format conversion device according to any preceding claim, further comprising a format conversion control circuit that supplies a changeover control signal to said changeover circuit in accordance with input image format information and output image format information.

5. An image format conversion device that converts the input image format of image data included in a digital television signal into a prescribed output image format, comprising:
an image format conversion circuit including a horizontal filter that performs a conversion of pixel data in a horizontal direction; a line memory that stores pixel data of a plurality of lines; and a vertical filter that performs a conversion of pixel data in a vertical direction stored in said line memory; and
a control circuit that performs changeover control of an order of said horizontal filter and vertical filter of said image format conversion circuit in accordance with the input image format contained in said digital television signal or said output image format;
wherein format conversion is performed between image formats in an image format group comprising at least a first image format having a first horizontal dot number and a second image format having a second horizontal dot number smaller than the first horizontal dot number; and wherein said control circuit, if said input image format is said first image format, controls the image format conversion circuit to have a first configuration in which said horizontal filter is provided on an upstream side and said line memory and vertical filter are provided on a downstream side thereof, and, if said output image format is said first image format, controls the image format conversion circuit to have a second configuration in which said line memory and vertical filter are provided on the upstream side and said horizontal filter is provided on the downstream side thereof.

6. The image format conversion device according to claim 2 or 5, wherein said line memory has a capacity corresponding to said second horizontal dot number.

7. The image format conversion device according to claim 5, wherein said image format conversion circuit comprises first and second image format conversion circuits; and
said control circuit controls said first and second image format conversion circuits to have the first or second configuration in accordance with the output image format that is set correspondingly to output terminals of said first and second image format conversion circuits.

8. The image format conversion device according to any preceding claim, wherein said horizontal filter and vertical filter are changed in order in an expansion processing or a compression processing in accordance with a combination of said input and output image formats.

9. A computer program for converting the image format of image data having pixel data arranged in horizontal and vertical directions, said computer program containing program code means which, when executed by a processor, provides the functions of:
horizontal filtering means that performs a conversion of pixel data in the horizontal direction;
line memory means that stores pixel data of a plurality of lines;
vertical filtering means that performs a conversion of pixel data in the vertical direction stored in said line memory; and
changeover means which change over an order of said horizontal filter and vertical filter in accordance with a type of input or output image format.

10. An image format conversion method that converts the input image format of image data included in a digital television signal into a prescribed output image format, comprising a horizontal filtering step that performs a conversion of pixel data in a horizontal direction; a line memorizing step that stores pixel data of a plurality of lines; and a vertical filtering step that performs a conversion of pixel data in a vertical direction stored in said line memory; and
a changeover step of changing the order of performing the horizontal filtering step and the vertical filtering step in accordance with the input image format contained in said digital television signal or said output image format.
